# EUROPEAN PATENT SPECIFICATION

(11) **EP 3 712 536 B1**
(45) Date of publication and mention of the grant of the patent: **14.08.2024**
(21) Application number: 20163817.8
(22) Date of filing: 18.03.2020
(51) Int. Cl.: F24F 13/06, F24F 13/20, F24F 3/16, F24F 13/14

(54) **AIR PURIFYING APPARATUS**
LUFTREINIGUNGSVORRICHTUNG
APPAREIL DE PURIFICATION D'AIR

(30) Priority: 19.03.2019 KR 20190031439
(43) Date of publication of application: 23.09.2020
(73) Proprietor: LG Electronics Inc., 07336 SEOUL (KR); Chungang University Industry Academic Cooperation Foundation, Seoul 06974 (KR)
(72) Inventor: KANG, Jiyoung, 08592 Seoul (KR); CHUNG, Haeyoong, 08592 Seoul (KR); JEON, Jongkeon, 08592 Seoul (KR); LEE, David Kangseong, 08592 Seoul (KR); KWAK, Daeyoung, 06904 Seoul (KR); PARK, Sohee, 06985 Seoul (KR)
(74) Representative: Vossius & Partner Patentanwälte Rechtsanwälte mbB

(56) References cited:
- EP-A1- 3 211 345
- WO-A1-2013/176213
- CN-A- 106 765 653
- CN-U- 208 222 678
- CN-U- 208 296 183
- KR-A- 20170 044 542

## Description

The present invention relates to an air purifying apparatus.

The air purifying apparatus is an apparatus which suctions contaminated air to purify the contaminated air, and then discharges purified air. For example, the air purifying apparatus may include an air blowing device which flows outside air into the interior of the air purifying apparatus and discharges the outdoor air to the outside, and a filter capable of filtering dust, bacteria, and the like. Generally, an air purifying apparatus is configured to purify an indoor space such as a home or office.

CN 208 222 678 U and CN 106 765 653 A disclose air purification devices in which a purification device body is magnetically suspended on a base. A user can turn on or off the magnetic suspension air purifying device. A Hall element detects the position of the purifier body and adjusts the current intensity of the electromagnet coil so that the purification device body is always above the base.

CN 208 296 183 U discloses a magnetic levitation aroma humidifier, which comprises a humidifier main body and a base. By arranging a magnet and an electromagnet on the humidifier main body and the base respectively, the humidifier main body can be suspended and rotated above the base in order to achieve good visual effects.

Recently, consumers have a great need for a large-capacity air purifying apparatus in order to quickly purify the air. To this end, the applicant has filed an application for an air purifying apparatus, application No. KR 10-2016-0077888.

The technique discloses a multi-stage air purifying apparatus, and an upper-stage air purifying apparatus of a two-stage air purifying apparatus is provided with a flow switching device 300. The flow switching device is also called a booster because the flow switching device can quickly blow clean air into the desired space.

The flow switching device can perform the tilting operation and the rotating operation at the upper-end of the air purifying apparatus and operate the fan housed therein to further blow clean air.

The present invention proposes an air purifying apparatus which solves the problem of causing a flow loss of air by reversely narrowing the discharge space on the discharge side of the air purifying apparatus by a tilting mechanism, a rotation mechanism, and a fan necessary for the operation of the booster.

An object of the present invention is to improve the problem of limited selection of a user by using the booster at all times. This object is achieved with the features of the claims. The invention is specified by the features of independent claim 1. Preferred embodiments are defined in the dependent claims.

The present invention proposes an air purifying apparatus configured for utilizing a space narrowed by the tilting mechanism and the rotation mechanism.

The present invention enables the use of the air purifying apparatus more conveniently and efficiently by increasing the utilization of the head portion of the air purifying apparatus which is excellent in the user's attention.

The air purifying apparatus according to the present invention includes a main body having a fan and a filter and discharging purified clean air to a discharge port; and a floating body provided on the discharge port and rising above the discharge port. According to this, the discharge port can be provided without clogging to reduce the flow loss.

The floating body can be lifted from the main body by a magnetic force, so that an obstacle between the floating body and the main body may not be positioned.

The air purifying apparatus of the present invention further includes a magnetic body placed on the floating body; and a lower module provided in correspondence with the magnetic body in the main body, so that magnetic force can be transmitted by two magnetic members which are separated from each other.

According to the present invention, the lower module includes a lifting and lowering member which lifts and lowers in a vertical direction; a magnetic force generating unit provided in the lifting and lowering member and generating a magnetic force; and a magnetic force adjusting unit configured to adjust a magnetic force applied to the magnetic body and adjust the floating body to be inclined. According to this, the posture of the floating body can be maintained.

According to one embodiment, the lower module may further include a hall sensor, the magnetic field may be measured by the hall sensor, and a central position of the floating body may be maintained by controlling the magnetic force adjusting unit. According to this, the attitude of the floating body which is changed by the instantaneous external force can be maintained in a balanced state.

According to one embodiment, the magnetic force adjusting unit can adjust the inclination of the floating body, and the magnetic force adjusting unit can adjust an inclination direction of the floating body. According to this, direction and wind speed of the floating body can be adjusted, and the clean air discharged from the air purifying apparatus can be blown in various ways.

According to one embodiment, the magnetic force adjusting unit includes: a first magnetic force adjusting unit for maintaining a central position of the floating body; and a second magnetic force adjusting unit for performing at least one of adjustment of an inclination angle of the floating body and adjustment of an inclination direction of the floating body. According to the present invention, the posture, the inclination angle, and the inclination direction of the floating body can be adjusted together, and the user can use the floating body as various clean air blowing applications.

According to one embodiment, each of the floating body and the main body is provided with a WPT module, and the floating body is supplied with electric power from the main body wirelessly. According to this, the energy supply from the main body to the floating body can be conveniently performed.

By the WPT module, the floating body and the main body communicate with each other, and thus a control operation can be performed between the floating body and the main body.

According to one embodiment, the main body includes a seating grill which is provided to be long in the vertical direction, in which the discharge port is provided at the upper end of the main body, and in which the upper surface of the discharge port is provided with a downwardly recessed in order to seat the floating body. According to this, clean air can be blown from a place where the indoor space is as high as possible, so that clean air can be supplied to a wider indoor space.

According to one embodiment, the seating grill is provided with a linear member in a lattice shape so that clean air can pass therethrough so that the resistance of the discharge flow path of the clean air can be reduced.

According to one embodiment, a main body module provided on the closest lower side of the seating grill and interacting with the floating body is included so that the interaction between the floating body and the main body can be smoothly performed.

According to one embodiment, the main body module includes: a lower module provided corresponding to a magnetic body placed on the floating body; and another WPT module corresponding to the WPT module placed on the floating body. According to this, the components requiring connection between the main body and the floating body are provided in a single main body module, so that mutual remote operation can be smoothly performed.

According to one embodiment, the floating body is provided with a fan, so that clean air can be blown farther into the indoor space.

According to one embodiment, an air quality sensor is provided on the floating body to inform the user of the quality of the discharged air.

According to one embodiment, the floating body described above is provided with a lamp, which can improve the visibility of the user.

According to one embodiment, the floating body is provided with a display so that the operating state of the floating body and the main body can be easily recognized. The display may be provided with a touch panel so that the user may operate the floating body and the main body.

According to the present invention, the air purifying apparatus includes: a main body for discharging clean air to a discharge port; and a floating body floating from the main body by a magnetic force. According to the present invention, there is an advantage that since the discharge port of the main body is completely opened at the time of operation of the main body, the flow path resistance is reduced and the opening of the discharge port is enlarged because there is no connection structure between the main body and the floating body.

The air purifying apparatus further includes a main body for discharging air to a discharge port; and a floating body for floating the air from the discharge port to diffuse the air. According to the present invention, clean air can be supplied further.

According to the present invention, since a large interval between the booster and the main body is provided and the obstacle is eliminated on the airflow path, discharge efficiency of the clean air discharged from the air purifying apparatus can be increased.

According to the present invention, since the user can select whether or not to use the booster, the user's selection is enhanced, various operating modes of the air purifying apparatus can be implemented, and the user can operate the air purifying apparatus in the desired state.

According to the present invention, the user can more conveniently use the air purifying apparatus by mounting various functions on a space between the booster and the main body and a widened space inside the booster.

According to the present invention, since the time information can be transmitted through the booster of the air purifying apparatus to be mainly observed by the user, the air purifying apparatus can be more conveniently used.

### BRIEF DESCRIPTION OF THE DRAWINGS

Fig. 1 is a front view illustrating an air purifying apparatus according to an embodiment.
Fig. 2 is a sectional view illustrating the internal structure of the air purifying apparatus according to an embodiment.
Fig. 3 is an enlarged view illustrating the upper portion of the air purifying apparatus according to an embodiment.
Figs. 4 and 5 are schematic front views illustrating a floating body and a lower body according to the embodiment, Fig. 4 is a view illustrating the floating body floating relatively low in the air, and Fig. 5 is a view illustrating the floating body floating with a relatively high in the air.
Figs. 6 and 7 are perspective views illustrating the inside of the lower body, Fig. 6 illustrates a lifting and lowering member positioned at a relatively low height h1, and Fig. 7 illustrates the lifting and lowering member positioned at a relatively high height h2.
Fig. 8 is a view for explaining the action of the floating booster.
Figs. 9 and 10 are block diagrams illustrating a floating body and a main body, respectively.

### DETAILED DESCRIPTION OF THE EMBODIMENTS

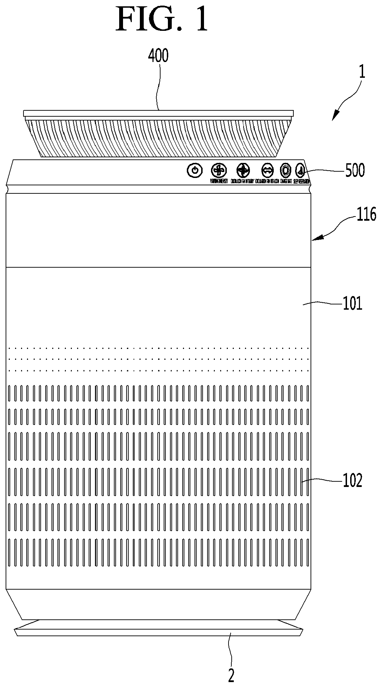

Fig. 1 is a front view illustrating an air purifying apparatus according to an embodiment.

Referring to Fig. 1, an air purifying apparatus 1 according to an embodiment includes a main body 116 which is provided to be long in a cylindrical shape in a vertical direction and a floating body 400 provided at an upper-end portion of the main body 116. The floating body 400 may be seated on the main body 116 or float upward.

The main body 116 suctions air from at least one of side surfaces and a lower surface and discharges the air to an upper surface. The air discharged from the main body 116 has a high flow rate and can be changed a flow direction through the floating body 400.

The main body 116 includes a cylindrical outer wall 101 forming a space therein and a base 2 placed at the lower end of the outer wall. A suction portion 102 is provided below the outer wall 101 to allow the outside air to be suctioned. A main body display 500 is provided at an upper-end of the main body 500 to display an operation state or an outside air state of the main body 116.

The floating body 400 can float upward. The floating body may be provided with a fan therein. By the forced blowing by the fan and the manual rotation of the fan by the discharged clean air, the floating body can perform the role of switching or concentrating the wind operation. In this way, since it is possible to perform an additional action on the clean air, the floating body can be called the floating booster 400.

The floating body 400 can float by a magnetic force without having a separate rotation mechanism, a tilting mechanism, and the like. An article for floating the floating body 400 interposed in the space between the floating body 400 and the main body 116 may not be provided but may be empty.

When the floating body 400 floats, there is an empty space between the floating body 400 and the main body 116, and there is no article interfering with the flow of the clean air.

In the drawing, the floating body 400 is in a floating state, and the floating distance of the floating body 400 can be adjusted. The cleaner air from the main body 116 can be discharged more smoothly as the floating body 400 floats higher.

The floating body 400 may provide a contour using a sparse frame. Therefore, clean air discharged from the main body 116 can be discharged through the floating body 400 even in a state where the floating body 400 does not float.

The floating body 400 may receive power transferred from the main body 116 by wireless power transfer (WPT). The floating body can float by mutual magnetic action with the main body. A fan is received in the floating body 400 to perform the rotation of the floating booster and air blowing action through the fan. In this case, the function of the floating booster can be performed.

Hereinafter, the air purifying apparatus according to the embodiment will be described in detail together with an internal configuration.

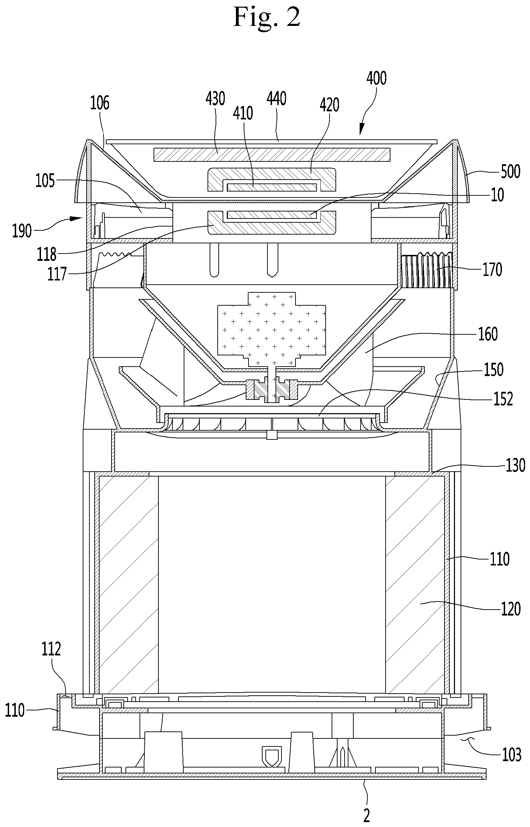

Fig. 2 is a sectional view illustrating an internal configuration of an air purifying apparatus according to an embodiment. Fig. 2 can be understood as a state where the configuration of the outer wall 101 and the like is removed in Fig. 1. Referring to Fig. 2, a vertical direction is referred to as an axial direction, and a horizontal direction is referred to as a radial direction. Here, the vertical direction can be said to be the same as a gravity direction.

Referring to Fig. 2, the air purifying apparatus 1 according to the embodiment can generate an airflow. In this case, the airflow can suction indoor air present in the lower portion of the air purifying apparatus 1.

The axial direction may correspond to a central axial direction of the fan 160, that is, the motor axial direction of the fan. The radial direction can be understood as a direction perpendicular to the axial direction. An imaginary circular direction formed when the rotation is performed about the axial direction and using the distance in the radial direction as the rotation radius can be a circumferential direction.

The air purifying apparatus 1 may include a base 2 provided on the lower side of the outer wall 101 and placed on the bottom. The base 2 may be spaced downwardly from the lower end portion of the outer wall 101. The base-side suction portion 103 may be formed in the spacing space between the outer wall 101 and the base 2.

The air suctioned through the base-side suction portion 103 may flow upward through the suction port 112 of the suction grill 110 provided on the upper side of the base 2.

A filter member 120 disposed above the suction grill 110 and filtering the air can be further included. The air suctioned through the suction port 112 and the base suction portion 103 can pass through the filter member 120. Air can flow into the interior of the filter member through the outer circumferential surface of the cylindrical filter member 120. The filter member 120 may have a cylindrical shape and a filter surface for filtering air.

The air purifying apparatus 1 may further include a filter frame 130 forming a space for mounting the filter member 120. The filter frame 130 may function to support an entire load of each component which performs the function of the air purifying apparatus 1 inside the outer wall 101.

Since the filter member 120 has a cylindrical shape, it is possible to introduce air in any direction with respect to the filter member 120. Accordingly, the filtering area of the air can be increased.

The mounting space may be formed in a cylindrical shape corresponding to the shape of the filter member 120. The filter member 120 may be slidably pulled in the mounting space during the mounting process. On the contrary, the filter member 120 can be slidably pulled out from the mounting space in the separating process.

An air blowing device is provided to provide airflow inside the outer wall 101. The air blowing device includes a fan housing 150 installed on an outlet side of the filter member 120. A fan 160 is received in the fan housing 150. The fan housing 150 may be supported by the filter frame 130.

The air blowing device may further include a fan 160 which provides a flow pressure of air through the rotation. The fan 160 is placed above a fan inflow portion 152. As the fan 160, a centrifugal fan for introducing air in the axial direction and discharging air upward in the radial direction may be provided.

The air blowing device may further include an air guide device 170 coupled to an upper side of the fan 160 to guide the flow of air passing through the fan 160. The air guide device 170 may be positioned above the fan housing 150. For example, the air guide device 170 is similar to the outer diameter of the fan housing 150 and is stacked on the upper and lower sides of the fan housing 150 to guide the flow of the air passing through the fan 160.

The discharge port 105 may be formed on the upper portion of the air purifying apparatus 1. The discharge port 105 may be formed in and may correspond to a discharge grill of the discharge guide device 190 provided in the air purifying apparatus 1. The discharge guide device 190 may form an outer appearance of an upper-end portion of the air purifying apparatus 1.

The discharge guide device 190 may further include a seating grill 106 for seating the floating body 400. At least a portion of the seating grill 106 is provided in a shape corresponding to the lower shape of the floating body 400 so that the floating body 400 can be stably positioned when the floating body 400 is seated without floating.

The seating grill 106 may be provided in a lattice shape in which a plurality of linear members intersect each other. The seating grill 106 can minimize the flow resistance of the clean air discharged from the fan 160. The seating grill 106 may be provided above the discharge grill 105.

Below the approximately central portion of the seating grill, a main body module 118 may be provided which interacts with the floating body 400. The main body module 118 may be provided with a lower body 10 which supports the floating body 400 from below, and a main body WPT module 117.

A member necessary for the operation of the floating body 400 may be received in the lower body 10. The main body module 118 may be fixed to the discharge guide device 190 including the discharge grill 105.

The main body module 118 is a somewhat heavy member due to the components lying therein. At least a pair of discharge grills 105 may be provided in a state of being spaced in the vertical direction and facing each other, and the main body module 118 may be supported by the pair of discharge grills 105. The main body module 118 may be supported on a lower surface of a separate member, for example, the seating grill 106, which is different from the discharge grill 105.

The main body module 118 may be positioned below the floating body 400 to allow the floating body 400 to overcome gravity and float by the lower body 10.

The seating grill 106 and the discharge grill 105 are described as being provided as one member of the discharge guide apparatus 190. However, in order to perform the respective functions, the seating grill 106 and the discharge grill 105 can be provided as a member to be fastened to the other members such as the air guide device 170 and the fan housing 150.

The main body display 500 may be provided at an upper-end portion of the outer wall 101. The main body display 500 can display an operating state, current air quality, and the like. The main body display 500 is provided with a touch panel so that the user can use the touch panel as an operation unit of the air purifying apparatus 1.

The main body display 500 may be provided with an operation unit of the floating body 400. A separate display may not be provided on the floating body 400. However, in the following description, it is described that a separate floating body display 440 is also provided on the floating body 400 for ease of understanding.

If the display body 440 is not provided on the floating body, air may flow through the space in which the floating body display 440 is placed. In this case, since the flow of the clean air passing through or passing by the floating body 400 is not blocked that much, an advantage that the flow path resistance is further reduced can be obtained.

The floating body 400 is provided with a magnetic body 410 for generating a force corresponding to an electromagnetic force provided from the outside in order to float the floating body, a floating body WPT module 420 for receiving power wirelessly, action units 430 which are various members necessary for the operation of the air purifying apparatus may be provided.

Detailed interaction between the floating body 400 and the lower module 10 will be described later.

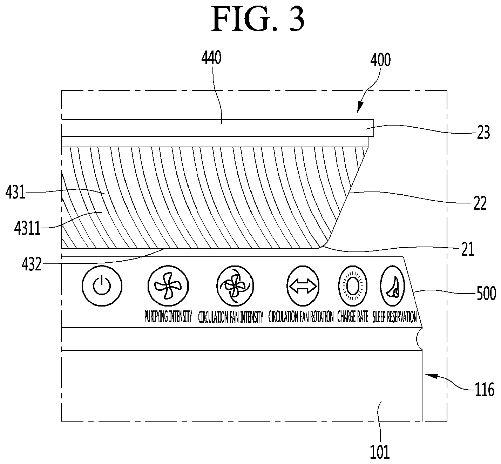

Fig. 3 is an enlarged view illustrating the upper portion of the air purifying apparatus according to an embodiment.

Referring to Fig. 3, as already described, a main body display 500 is provided at an upper-end of the main body 116 in an inclined manner toward the inside thereof. The main body display 500 illustrates a control state of both the main body and the floating body and can perform operations of both the main body and the floating body.

Although not illustrated, an upper surface of the main body 116 is provided with a seating grill 106 which is downwardly recessed, and the floating body 400 is placed inside the seating grill 106.

A floating body display 440 is placed on the edge of the upper portion 23 of the floating body 440 to perform a function of an operation unit using a status display and the touch panel.

The body of the middle portion 22 of the floating body 400 extends to the lower portion 21 by providing a rotation grill 431 in a shape that is reduced downward. A bottom portion 432 may be provided at the lower end of the floating body 400.

The rotation grill 431 may be provided with a plurality of ribs 4311 bent in one direction and in a form of a rotation blade extending in the vertical direction. The discharged air is blown to the rotation grill 431 so that the floating body 400 can be rotated by applying a force to the rib. The clean air which has passed through the floating body 400 has a reduced flow rate and can supply clean air to a peripheral portion near the air purifying apparatus.

The rib 4311 may be provided in the rotation grill 431 in a linear shape instead of a blade shape. In this case, even if clean air is discharged from the main body 116, the rotation grill 431 may not rotate. In this case, since the loss in the flow rate of the clean air is reduced, clean air can spread to a wider area.

Hereinafter, the interaction between the floating body and the lower body will be described in more detail.

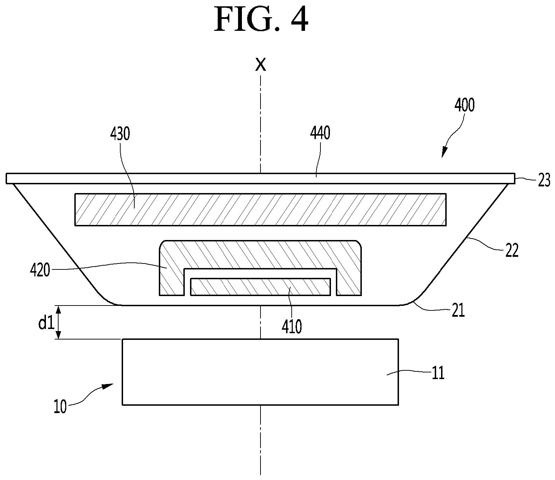

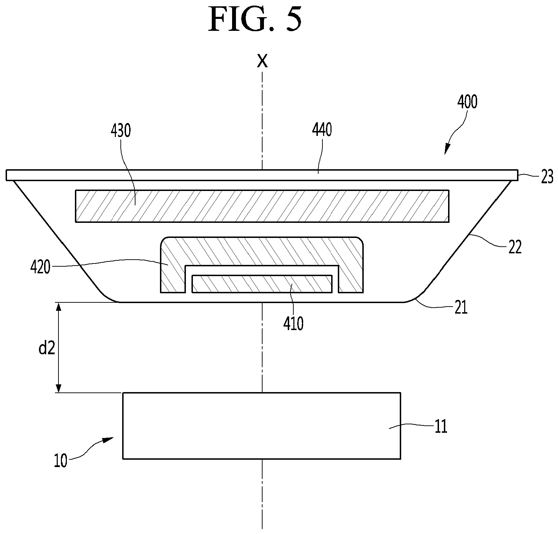

Figs. 4 and 5 are schematic front views illustrating a floating body and a lower body according to the embodiment, Fig. 4 is a view illustrating the floating body floating relatively low in the air, and Fig. 5 is a view illustrating the floating body floating with a relatively high in the air.

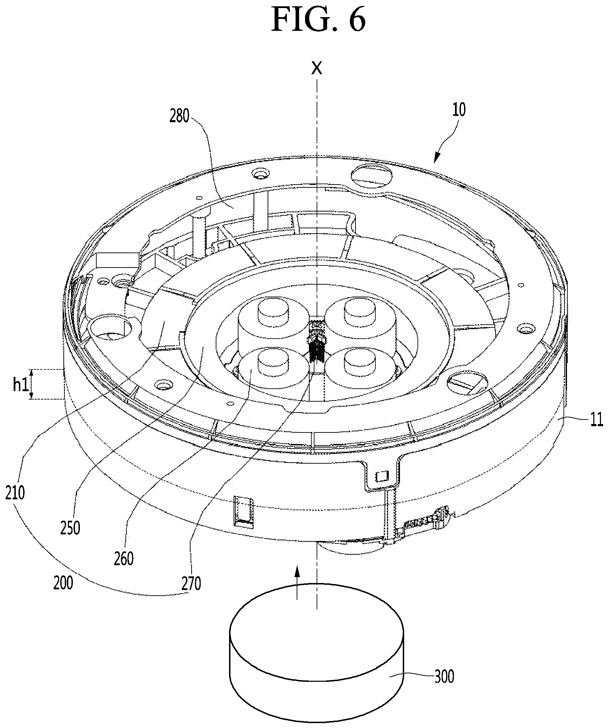

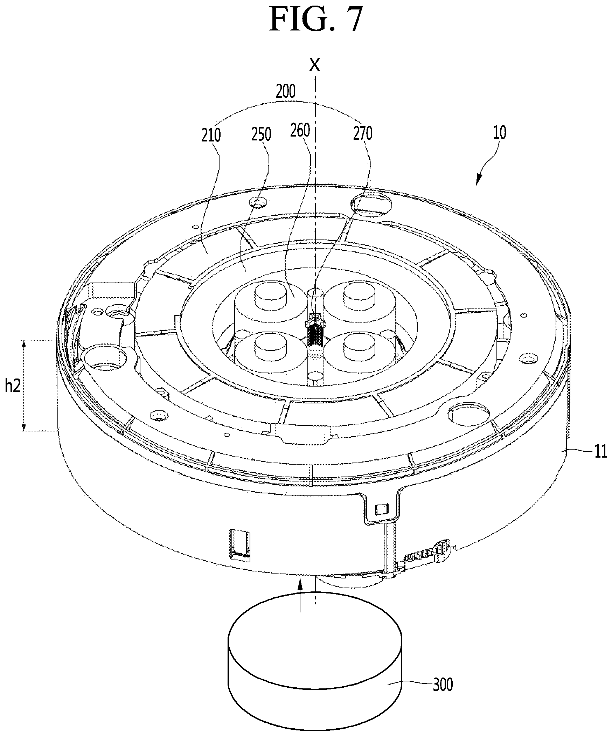

Figs. 6 and 7 are perspective views illustrating the inside of the lower body, Fig. 6 illustrates a lifting and lowering member positioned at a relatively low height h1, and Fig. 7 illustrates the lifting and lowering member positioned at a relatively high height h2.

Referring to Figs. 4 to 7, a lower body 10 for generating a magnetic force and a floating body 400 floating in the air using a repulsive force generated by a magnetic force provided from the lower body 10 are illustrated.

The lower body 10 is disposed on the lower side of the floating body 400. The lower body 10 may include a case 11 forming an outer appearance. The case 11 may be formed in a circular shape when viewed from above. The case 11 forms a space therein. The case 11 can receive therein a lifting and lowering member 280 to be described later and a lifting mechanism 300 for lifting and lowering the lifting and lowering member 280. The lower body 10 can be supported by the discharge grill 105 through the main body module 118. Of course, the lower body 10 may be fastened to another portion connected to the fan housing.

The magnetic body 410 may be disposed inside the lower portion 21 of the floating body 400.

The lower body 10 includes a lifting and lowering member 280 which is vertically movable. The lower body 10 includes a lifting mechanism 300 for moving the lifting and lowering member 280 in the vertical direction.

The lifting and lowering member 280 includes a magnetic force generating unit 250 which generates a magnetic field for floating the floating body 400 in the air. The magnetic force generating unit 250 generates a magnetic force in relation to the magnetic body 410. The magnetic force generating unit 250 may be provided as an electromagnet, but the magnetic force generating unit is provided with a ring-shaped permanent magnet in this embodiment. One of the upper surface and the lower surface of the magnetic force generating unit 250 is an N pole and the other thereof is an S pole. Hereinafter, the description will be made on the basis that the upper surface of the magnetic force generating unit 250 is an N pole in the present embodiment.

Some of the magnetic force lines generated in the magnetic force generating unit 250 start from the N pole (the upper surface of the magnetic force generating unit), are bent in a direction opposite to the centrifugal direction, pass through the floating body 400 and the lower body 10 in the vertical direction at the central axis X, and return to the S pole (lower side surface of the magnetic force generating unit).

Another portion of the magnetic force lines generated in the magnetic force generating unit 250 start from the N pole (the upper side surface of the magnetic force generating unit), are bent in the centrifugal direction and return to the S pole (lower surface of the magnetic force generating unit). In this case, the upper side is the S pole on the central axis X and the lower side is the N pole.

The floating body 400 is configured such that the lower surface of the magnetic body 410 becomes the S pole and the upper surface thereof becomes the N pole in order to float in the air on the central axis X. In other words, the lower surface of the magnetic body 410 of the floating body 400 and the upper surface of the ring-shaped magnetic force generating unit 250 of the lower body 10 are disposed to have opposite polarities to each other.

The magnetic force (repulsive force) becomes stronger as the floating body 400 is positioned closer to the magnetic force generating unit 250 on the central axis X. The floating height of the floating body 400 is maintained at a position where the gravity acting in the downward direction and the magnetic force (repulsive force) acting in the upward direction to the floating body 400 are in equilibrium. Hereinafter, a state where the floating body 400 floats in the air when the gravitational force and magnetic force acting on the floating body 400 are in equilibrium is defined as an "equilibrium state".

Since the relative position of the floating body 400 and the magnetic force generating unit 250 is constant in the equilibrium state, if the height of the magnetic force generating unit 250 is changed in the vertical direction, the floating height of the floating body 400 in the air can also be changed in the vertical direction.

For example, when the magnetic force generating unit 250 is moved downward, the floating body 400 may be seated on the seating grill 106. This case may be when the floating operation of the floating body 400 is stopped.

The lifting and lowering member 280 includes a frame 210 to which the magnetic force generating unit 250 is fixed. The frame 210 supports the magnetic force generating unit 250. The frame 210 may be formed in a circular shape when viewed from above. The magnetic force generating unit 250 is disposed at a central portion of the frame 210 when viewed from above. The magnetic force generating unit 250 is disposed above the frame 210.

The lifting and lowering member 280 includes a hall sensor 270 disposed on the central axis X. The hall sensor 270 senses the magnetic flux. The magnetic flux detected by the hall sensor 270 is defined as "a reference magnetic flux value" only in a case where the magnetic flux generated by the magnetic force generating unit 250 exists. "The reference magnetic flux value" is not changed by the magnetic body 410 of the floating body 400 in an equilibrium state.

The magnetic flux value detected by the hall sensor 270 by the magnetic flux of the magnetic body 410 is set to be different from the reference magnetic flux value in a case where the floating body 400 deviates from the central axis X (in a case where the equilibrium state is momentarily broken).

The lifting and lowering member 280 includes a magnetic force adjusting unit 260 provided to prevent the floating body 400 from deviating from the central axis X. The magnetic force adjusting unit 260 may be provided with an electromagnet provided by a coil. A plurality of magnetic force adjusting units 260 are spaced apart from each other about the central axis X in the circumferential direction.

In this embodiment, the four magnetic force adjusting units 260a, 260b, 260c, and 260d are spaced apart from each other by a predetermined interval in the circumferential direction. When a current is applied to any element of the magnetic force adjusting unit 260, at least one of the upper and lower surfaces of at least one element of the magnetic force adjusting unit 260 becomes an N pole and the other thereof becomes an S pole so as to generate additional magnetic flux, and the floating body 400 can be guided to be disposed on the central axis X using this. The magnetic force adjusting unit may adjust the magnetic force by having at least three magnetic force adjusting units. In this case, one magnetic force adjusting unit can cover a range of 120 degrees.

For example, in a case where the floating body 400, which was in an equilibrium state, exhibits a fine movement which deviates from the central axis X in one direction, the hall sensor 270 detects the magnetic flux change according to this, and current is applied to the magnetic force adjusting unit 260a disposed in one direction. When the upper surface of the magnetic force adjusting unit 260a applied with the current becomes the S pole, the floating body 400 can be pushed back onto the central axis X.

Meanwhile, although not illustrated in the drawing, as another embodiment, four magnetic force adjusting units 260a, 260b, 260c, and 260d may be additionally disposed radially in addition to the outside of the four magnetic force adjusting units. This can be referred to as a second magnetic force adjusting unit. According to such an overlapping arrangement, it is possible to control the magnetic force to incline the floating body 400. In this case, the four magnetic force adjusting units 260a, 260b, 260c, and 260d may be referred to as a first magnetic force adjusting unit.

For example, a pair of facing magnetic force adjusting units of the second magnetic force adjusting units may be selected to weaken the magnetic force of one of the magnetic force adjusting units and to strengthen the magnetic force of the other magnetic force adjusting unit. In this case, the magnetic body 410 may be inclined.

At this time, the action of the first magnetic force adjusting unit can be continually maintained. In this case, the action in which the central position is maintained can be continuously performed. For this purpose, when the control unit analyses a signal detected by the hall sensor 270, it may be considered that a magnetic force signal is artificially applied to the second magnetic force adjusting unit to incline the floating body 400. For example, the signal determined by the second magnetic force adjusting unit may be deleted from the detection signal of the hall sensor.

When the fan, which is received in the floating body 400, is rotated in a state where the floating body 400 is inclined, the function of the booster can be performed.

A plurality of the second magnetic force adjusting units may be radially provided. For example, twenty-four magnetic force adjusting units can be disposed radially. A pair of facing magnetic force adjusting units constituting the second magnetic force adjusting unit can continuously move in the circumferential direction. In this case, the inclination direction of the floating body 400 may continuously change. At this time, the discharge direction of the clean air can be rotated.

The direction in which the floating body 400 is inclined is rotated and the fan received in the floating body 400 is rotated so that the booster can blow clean air in various directions.

The lifting and lowering member 280 can be moved by the lifting mechanism 300 in the vertical direction. As the lifting mechanism, various lifting mechanisms such as a rack pinion mechanism by a motor, a worm mechanism, and a pneumatic or hydraulic mechanism operated by a plunger can be applied.

In Fig. 6, a state where the lifting and lowering member 280 is in the middle of lifting and lowering is indicated. The lifting and lowering member 280 is lifted by h1, and accordingly, the floating body 400 is lifted by d1 as in Fig. 4.

In Fig. 7, a state where the lifting and lowering member 280 is lifted completely is indicated. The lifting and lowering member 280 is lifted by h2, and accordingly, the floating body 400 is lifted by d2 in Fig. 5.

The lowest height of the lifting and lowering member 280 corresponds to the height so that the floating body 400 is placed on the seating grill 106 as described above.

Inside the floating body 400, a magnetic body 410 for floating the floating body, a WPT module 420 for receiving energy from the floating body 400, the action unit 430 for performing various actions using the energy received are provided. A floating body display 440 is also provided as already described. In addition, a battery (not illustrated) for storing power may be included.

When the floating body 400 is separated by height, the floating body can be divided into three portions. First, a floating body display 440 to be visible to the user may be positioned on the upper portion 23. The intermediate portion 22 may be provided with an action unit 430 on which a function which may be performed by the floating body 400 is performed. The lower portion 21 may be provided with a magnetic body 410 and/or a floating body WPT module 420 receiving the magnetic force and energy from the main body 116 and communicating with the main body 116.

According to the configuration described above, the function of the floating body 400 can be performed. Hereinafter, the action of the floating booster will be described in more detail.

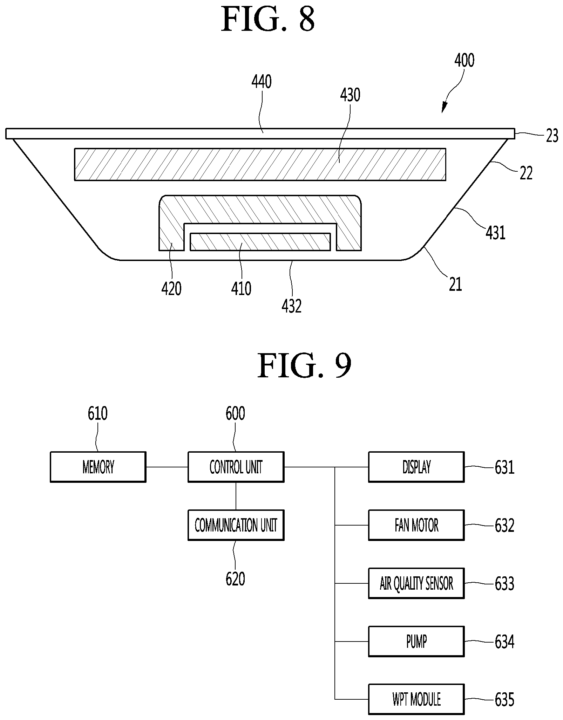

Fig. 8 is a view for explaining the action of the floating booster.

Referring to Fig. 8, the floating body 400 has an upper-end portion which is widest and a narrow lower side. According to this, the center of gravity is positioned at the center, thereby reducing the possibility that the floating body 400 is reversed. The heavy magnetic body 410 positioned at the center of the lower side may be a means for reducing the possibility of reversal.

A floating body display 440 is placed on the upper portion 23 so that the user can conveniently look at the situation of the floating body and the main body, and can issue an instruction.

The action unit 430 may be positioned at the intermediate portion 22. Various configurations may be employed as the action unit described above.

For example, a lamp may be provided as an example of an action unit. The lamps may vary in color according to the air quality, thereby enhancing the visibility of the consumers.

As another example of the action unit, a fan can be provided. By rotating the fan, the discharge wind output from the discharge guide device 190 on the main body side can be blown farther. In this case, the floating body 400 can be operated as a booster. Since the floating body 400 can be rotated in an inclined state, the direction in which the booster blows can be adjusted. In this case, the display 440 may not be provided.

In a case where the fan is rotated, the floating body 400 can be rotated by actions of action and reaction. However, since the weight of the fan and the weight of the lifting body described above are different from each other, the number of revolutions of the lifting body does not reach a rotational speed enough to worry about safety. The low-speed rotation of the lifting body can more easily inform the user that the air purifying apparatus is in operation.

As another example of the action unit, an air quality sensor may be provided. The air quality sensor can measure the air quality of the discharged clean air. In this case, the performance of the air purifying apparatus according to the embodiment can be visualized and displayed to the user, so that the replacement point of the filter member 120 can be informed easily.

The floating body WPT module 420 may be placed below the action unit 430.

The floating body WPT module 420 performs a function of a wireless power transfer together with the main body WPT module (117 of Fig. 2) of the main body. The floating body WPT module 420 may receive power from the main body WPT module 117.

The wireless power transfer (WPT) is a technique for wirelessly transferring power. The wireless power transfer technique includes an inductive coupling method and a magnetic resonance method.

The magnetic induction method is a technique of transferring the transmission power as received power by using electromagnetic induction phenomena between the first and second coils. In the magnetic induction method, a frequency band of 100 to 205 Hz (WPC), 232 to 278 kHz, and 205 to 300 kHz (PMA) is used for wireless power, and an in-band method is used for communication.

The magnetic resonance method is a technique of transmitting and receiving power by using a resonance phenomenon between two coils of transmission and reception having a resonance frequency. The frequency band of the magnetic resonance method uses a band of 6.78 MHz + 15 kHz (A4WP) for wireless power and uses BLE 2.4 GHz for an out-band method for communication.

The two techniques described above have a division between transmission capacity and preference for each usage. In a case of the embodiment, any method may be applied.

The magnetic body 410 may be provided as a permanent magnet.

The outer appearance of the floating body 400 may be provided to the rotation grill 431 and a bottom portion 432 provided on the bottom surface of the rotation grill 431.

The bottom portion 432 and the rotation grill 431 may be in contact with the inner surface of the seating grill 106. Thus, it is possible to reduce the possibility that the floating body 400 may be reversed when the floating body 400 floats due to the interaction with the lower body 10.

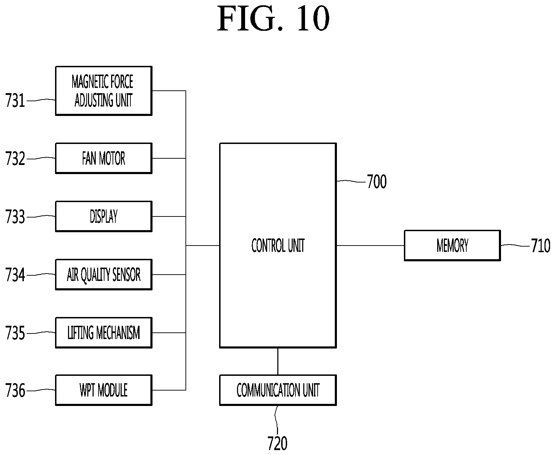

Figs. 9 and 10 are block diagrams of a floating body and a main body, respectively.

Referring to Figs. 9 and 10, the interaction between the floating body and the main body will be described. In the following description, though the components already described above, it can be described by using separate reference numerals for ease of understanding. For example, the display provided on the main body side originally uses 500 as a reference numeral but uses 733 as a reference numeral in the present description. As another example, the lifting mechanism uses 300 in the main body but uses 735 in the present description.

Control units 600 and 700, memories 610 and 710 and communication units 620 and 720 are provided in the floating body 400 and the main body to control the respective equipment themselves, the necessary information is stored, and communication therebetween can be performed.

The display 631, the fan motor 632, the air quality sensor 633, and the lamp 634 may be provided as the drive unit of the floating body 400. As the drive unit of the main body 116, a magnetic force adjusting unit 731, a fan motor 732, a display 733, a lifting mechanism 735, and an air quality sensor 734 may be provided.

Each of the mechanisms of the floating body and the main body may be provided with all the configurations, and the unrelated configuration may be deleted or may not be provided as understood in the description of the present invention.

When the present invention is operated in the normal mode by the user in which the user does not use the floating body, the floating body 400 does not move and can provide only the flow path through which the clean air passes. At this time, as already described, each configuration is provided in a lattice structure rather than a planar structure, and the display may be provided only on the edge portion, so as not to interfere with airflow.

When the user wants to use the floating body, the floating body 400 can be lifted by using the lifting mechanism 735. During lifting or after being lifted, the magnetic force adjusting unit 731 can maintain a horizontal state. After the use of the floating body is completed, the lifting mechanism 735 can be operated in reverse to be seated on the seating grill 106.

When the user uses the floating body as a booster, the fan motor 632 can be operated. At this time, more air can be blown farther through the booster.

When the user desires to supply clean air farther in various directions while using the floating body as a booster, the magnetic force adjusting unit 731 can be adjusted in a state where the floating body is lifted. At this time, the floating body may be inclined and may be rotated in an inclined state. At this time, clean air can be blown into distant space in the room.

When the user wants to inform the user of the air quality of the clean air by using the floating body, the air quality sensor 633 can be operated. Information known by the air quality sensor 633 may be displayed on at least one of the floating body and the main body. The air quality of the clean air may be displayed and information measured by the air quality sensor 734 of the main body may be displayed together.

In order to supply power to the floating body, the WPT module 736 of the main body and the WPT module 635 of the floating body can operate together. The WPT modules 736 and 635 may perform the functions of the communication units 620 and 720 since the WPT modules can perform communication.

According to the present invention, the supply of clean air from the air purifying apparatus can be performed in various ways. In this case, there is an advantage that the flow path resistance is reduced at the time of operation of the booster, and space utilization of the air purifying apparatus is enhanced, so that it is possible to satisfy consumers more variously.

## Claims

1. An air purifying apparatus comprising:
a main body (116) being configured to discharge clean air obtained by filtering foreign matters to a discharge port (105);
a floating body (400) which is floated from the main body (116) ;
a magnetic body (410) placed on the floating body (400); and
a lower module (10) provided corresponding to the magnetic body (410) in the main body (116),
**characterized in that**:
the lower module (10) includes:
a lifting and lowering member (280) which is vertically movable,
a magnetic force generating unit (250) provided on the lifting and lowering member (280) and generating a magnetic force; and
a magnetic force adjusting unit (260; 731) being configured to
adjust a magnetic force applied to the magnetic body (410), and
adjust the floating body (400) to be inclined.

2. The air purifying apparatus of claim 1, wherein the floating body (400) is lifted from the main body (116) by a magnetic force.

3. The air purifying apparatus of claim 1 or 2, further comprising
a hall sensor (270) provided in the lower module (10),
wherein the hall sensor (270) is configured to measure a magnetic field and control the magnetic force adjusting unit (260; 731) to maintain a central position of the floating body (400) .

4. The air purifying apparatus of claim 1, 2 or 3, wherein the magnetic force adjusting unit (260; 731) is capable of adjusting an inclination direction of the floating body (400).

5. The air purifying apparatus of any one of claims 1 to 4, wherein the magnetic force adjusting unit (260) includes
a first magnetic force adjusting unit (260a, 260b, 260c) which maintains a central position of the floating body (400); and
a second magnetic force adjusting unit performing at least one of adjustment of an inclination angle of the floating body (400) and adjustment of an inclination direction of the floating body (400).

6. The air purifying apparatus of any one of claims 1 to 5,
wherein the main body (116) is provided with the discharge port (105) at an upper end of the main body (116) which is provided to be long in the vertical direction,
wherein the floating body (400) is seated on the discharge port (105), and
the air purifying apparatus (1) includes:
a seating grill (106) provided by an upper surface of the discharge port (105) being recessed downward so as to seat the floating body (400).

7. The air purifying apparatus of claim 6, wherein the seating grill (106) is provided with linear members in a lattice shape so that clean air can pass therethrough.

8. The air purifying apparatus of claim 6 or 7, further comprising:
a main body module (118) provided on the closest lower side of the seating grill (106) and thus interacting with the floating body (400).

9. The air purifying apparatus of claim 8,
wherein the main body module (118) includes:
a lower module (10) provided corresponding to a magnetic body placed on the floating body (400); and
a WPT module (117; 736) provided corresponding to a WPT module (420; 635) placed on the floating body (400).

10. The air purifying apparatus of any one of claims 1 to 9, wherein the floating body (400) is provided with a fan (260).

11. The air purifying apparatus of any one of claims 1 to 10, wherein the floating body (400) is provided with an air quality sensor (633; 734).

12. The air purifying apparatus of any one of claims 1 to 11, wherein the floating body (400) is provided with a lamp (634) .

13. The air purifying apparatus of any one of claims 1 to 12, wherein the floating body (400) is provided with a display (440; 631; 733).

## Patentansprüche

1. Luftreinigungsvorrichtung, aufweisend:
einen Hauptkörper (116), der dazu ausgelegt ist, saubere Luft, die durch Ausfiltern von Fremdstoffen erhalten wurde, zu einer Ausgabeöffnung (105) auszugeben;
einen Schwebekörper (400), der bezüglich des Hauptkörpers (116) schwebend angeordnet ist;
einen Magnetkörper (410), der an dem Schwebekörper (400) angeordnet ist; und
ein unteres Modul (10), das entsprechend dem Magnetkörper (410) in dem Hauptkörper (116) vorgesehen ist,
**dadurch gekennzeichnet, dass**
das untere Modul (10) umfasst:
ein Hebe- und Senkglied (280), das vertikal beweglich ist,
eine Magnetkraft-Erzeugungseinheit (250), die an dem Hebe- und Senkglied (280) vorgesehen ist und eine Magnetkraft erzeugt; und
eine Magnetkraft-Einstelleinheit (260; 731), die ausgelegt ist zum
Einstellen einer auf den Magnetkörper (410) ausgeübten Magnetkraft, und
Einstellen des Schwebekörpers (400) derart, dass er geneigt ist.

2. Luftreinigungsvorrichtung nach Anspruch 1,
wobei der Schwebekörper (400) durch eine Magnetkraft vom Hauptkörper (116) angehoben wird.

3. Luftreinigungsvorrichtung nach Anspruch 1 oder 2, ferner umfassend:
einen Hall-Sensor (270), der in dem unteren Modul (10) vorgesehen ist,
wobei der Hall-Sensor (270) dazu ausgelegt ist, ein Magnetfeld zu messen und die Magnetkraft-Einstelleinheit (260; 731) anzusteuern, um eine zentrale Position des Schwebekörpers (400) aufrechtzuerhalten.

4. Luftreinigungsvorrichtung nach Anspruch 1, 2 oder 3,
wobei die Magnetkraft-Einstelleinheit (260; 731) in der Lage ist, eine Neigungsrichtung des Schwebekörpers (400) einzustellen.

5. Luftreinigungsvorrichtung nach einem der Ansprüche 1 bis 4,
wobei die Magnetkraft-Einstelleinheit (260) umfasst:
eine erste Magnetkraft-Einstelleinheit (260a, 260b, 260c), die eine zentrale Position des Schwebekörpers (400) aufrechterhält; und
eine zweite Magnetkraft-Einstelleinheit, die mindestens eine Einstellung eines Neigungswinkels des Schwebekörpers (400) und/oder eine Einstellung einer Neigungsrichtung des Schwebekörpers (400) vornimmt.

6. Luftreinigungsvorrichtung nach einem der Ansprüche 1 bis 5,
wobei der Hauptkörper (116) mit der Ausgabeöffnung (105) an einem oberen Ende des Hauptkörpers (116) versehen ist, die so vorgesehen ist, dass sie in der vertikalen Richtung langgestreckt verläuft,
wobei der Schwebekörper (400) auf der Ausgabeöffnung (105) sitzt, und
die Luftreinigungsvorrichtung (1) umfasst:
ein Sitzgitter (106), das von einer oberen Fläche der Ausgabeöffnung (105) bereitgestellt wird, die nach unten vertieft ausgebildet ist, um den Schwebekörper (400) aufzunehmen.

7. Luftreinigungsvorrichtung nach Anspruch 6,
wobei das Sitzgitter (106) mit linearen Elementen in einer Gitterform versehen ist, so dass saubere Luft durch dieses hindurchtreten kann.

8. Luftreinigungsvorrichtung nach Anspruch 6 oder 7, ferner umfassend:
ein Hauptkörpermodul (118), das an der nächstgelegenen unteren Seite des Sitzgitters (106) vorgesehen ist und somit mit dem Schwebekörper (400) zusammenwirkt.

9. Luftreinigungsvorrichtung nach Anspruch 8,
wobei das Hauptkörpermodul (118) umfasst:
ein unteres Modul (10), das entsprechend einem Magnetkörper vorgesehen ist, der an dem Schwebekörper (400) angeordnet ist; und
ein Modul zur drahtlosen Energieübertragung (117; 736), das entsprechend einem Modul zur drahtlosen Energieübertragung (420; 635) vorgesehen ist, das an dem Schwebekörper (400) angeordnet ist.

10. Luftreinigungsvorrichtung nach einem der Ansprüche 1 bis 9,
wobei der Schwebekörper (400) mit einem Gebläse (260) versehen ist.

11. Luftreinigungsvorrichtung nach einem der Ansprüche 1 bis 10,
wobei der Schwebekörper (400) mit einem Luftqualitätssensor (633; 734) versehen ist.

12. Luftreinigungsvorrichtung nach einem der Ansprüche 1 bis 11,
wobei der Schwebekörper (400) mit einer Leuchte (634) versehen ist.

13. Luftreinigungsvorrichtung nach einem der Ansprüche 1 bis 12,
wobei der Schwebekörper (400) mit einer Anzeige (440; 631; 733) versehen ist.

## Revendications

1. Appareil de purification d'air comprenant :
un corps principal (116) configuré pour évacuer de l'air propre obtenu en filtrant des corps étrangers vers un orifice d'évacuation (105) ;
un corps flottant (400) qui est flottant à partir du corps principal (116) ;
un corps magnétique (410) placé sur le corps flottant (400) ; et
un module inférieur (10) prévu de manière à correspondre au corps magnétique (410) dans le corps principal (116),
**caractérisé en ce que** :
le module inférieur (10) comporte :
un élément de levage et d'abaissement (280), qui est mobile verticalement,
une unité de génération de force magnétique (250) prévue sur l'élément de levage et d'abaissement (280) et générant une force magnétique ; et
une unité de réglage de force magnétique (260 ; 731) configurée pour
- régler une force magnétique appliquée sur le corps magnétique (410), et
- régler le corps flottant (400) de manière à l'incliner.

2. Appareil de purification d'air selon la revendication 1,
dans lequel le corps flottant (400) est soulevé du corps principal (116) par une force magnétique.

3. Appareil de purification d'air selon la revendication 1 ou 2, comprenant en outre
un capteur à effet Hall (270) prévu dans le module inférieur (10),
dans lequel le capteur à effet Hall (270) est configuré pour mesurer un champ magnétique et pour commander l'unité de réglage de force magnétique (260 ; 731) pour maintenir une position centrale du corps flottant (400).

4. Appareil de purification d'air selon la revendication 1, 2 ou 3,
dans lequel l'unité de réglage de force magnétique (260 ; 731) est capable de régler une direction d'inclinaison du corps flottant (400).

5. Appareil de purification d'air selon les revendications 1 à 4,
dans laquelle l'unité de réglage de force magnétique (260) comporte
une première unité de réglage de force magnétique (260a, 260b, 260c), qui maintient une position centrale du corps flottant (400) ; et
une deuxième unité de réglage de force magnétique réalisant au moins un parmi un réglage d'un angle d'inclinaison du corps flottant (400) et un réglage d'une direction d'inclinaison du corps flottant (400).

6. Appareil de purification d'air selon les revendications 1 à 5,
dans lequel le corps principal (116) est pourvu de l'orifice d'évacuation (105) sur une extrémité supérieure du corps principal (116) qui est prévue pour être long dans la direction verticale,
dans lequel le corps flottant (400) repose sur l'orifice d'évacuation (105), et
l'appareil de purification d'air (1) comporte :
une grille d'assise (106) fournie par une surface supérieure de l'orifice d'évacuation (105) en retrait vers le bas de manière à loger le corps flottant (400).

7. Appareil de purification d'air selon la revendication 6, dans lequel la grille d'assise (106) est prévue avec des éléments linéaires en forme de treillis de telle sorte que de l'air pur peut passer au travers.

8. Appareil de purification d'air selon la revendication 6 ou 7, comprenant en outre :
un module de corps principal (118) prévu sur le côté inférieur le plus proche de la grille d'assise (106) et interagissant ainsi avec le corps flottant (400).

9. Appareil de purification d'air selon la revendication 8,
dans lequel le module de corps principal (118) comporte :
un module inférieur (10) prévu de manière à correspondre à un corps magnétique placé sur le corps flottant (400) ; et
un module WPT (117 ; 736) prévu de manière à correspondre à un module WPT (420 ; 635) placé sur le corps flottant (400).

10. Appareil de purification d'air selon l'une quelconque des revendications 1 à 9, dans lequel le corps flottant (400) est prévu avec un ventilateur (260).

11. Appareil de purification d'air selon l'une quelconque des revendications 1 à 10, dans lequel le corps flottant (400) est prévu avec un capteur de qualité d'air (633 ; 734).

12. Appareil de purification d'air selon l'une quelconque des revendications 1 à 11, dans lequel le corps flottant (400) est prévu avec une lampe (634).

13. Appareil de purification d'air selon l'une quelconque des revendications 1 à 12, dans lequel le corps flottant (400) est prévu avec un système d'affichage (440 ; 631 ; 733).
